(19) **Europäisches Patentamt**

**European Patent Office**

**Office européen des brevets**

(11) **EP 1 470 333 B1**

(12) **EUROPÄISCHE PATENTSCHRIFT**

(45) Veröffentlichungstag und Bekanntmachung des Hinweises auf die Patenterteilung:
**12.04.2006 Patentblatt 2006/15**

(21) Anmeldenummer: **02772055.6**

(22) Anmeldetag: **12.09.2002**

(51) Int Cl.:
*F02P 5/15* (2006.01)     *F02D 41/14* (2006.01)

(86) Internationale Anmeldenummer:
**PCT/DE2002/003408**

(87) Internationale Veröffentlichungsnummer:
**WO 2003/062633 (31.07.2003 Gazette 2003/31)**

(54) **VERFAHREN UND VORRICHTUNG SOWIE COMPUTERPROGRAMM ZUR STEUERUNG EINES VERBRENNUNGSMOTORS**

METHOD AND DEVICE, IN ADDITION TO A COMPUTER PROGRAM, FOR CONTROLLING AN INTERNAL COMBUSTION ENGINE

PROCEDE, DISPOSITIF ET PROGRAMME INFORMATIQUE POUR LA GESTION D'UN MOTEUR A COMBUSTION INTERNE

(84) Benannte Vertragsstaaten:
**DE FR IT SE**

(30) Priorität: **22.01.2002 DE 10202437**

(43) Veröffentlichungstag der Anmeldung:
**27.10.2004 Patentblatt 2004/44**

(73) Patentinhaber: **ROBERT BOSCH GMBH**
**70442 Stuttgart (DE)**

(72) Erfinder:
- **KLEIN, Eberhard**
  **73207 Plochingen (DE)**
- **MALLEBREIN, Georg**
  **70825 Korntal-Muenchingen (DE)**
- **ESTEGHLAL, Gholamabas**
  **71638 Ludwigsburg (DE)**

- **HOCHSTRASSER, Patrick**
  **71732 Tamm (DE)**

(56) Entgegenhaltungen:
DE-C- 4 318 504          US-A- 5 558 178
US-A- 5 692 471          US-A- 5 832 897
US-B1- 6 205 973

- FISCHER M ET AL: "EFFIZIENTE APPLIKATION VON MOTORSTEUERUNGSFUNKTIONEN FUER OTTOMOTOREN" MTZ MOTORTECHNISCHE ZEITSCHRIFT, FRANCKH'SCHE VERLAGSHANDLUNG,ABTEILUNG TECHNIK. STUTTGART, DE, Bd. 61, Nr. 9, September 2000 (2000-09), Seiten 562-564,566-570, XP000959357 ISSN: 0024-8525

**Beschreibung**

Stand der Technik

Die Erfindung betrifft ein Verfahren und eine Vorrichtung sowie ein Computerprogramm zur Steuerung eines Verbrennungsmotors.

Aus der DE 42 39 711 A1 (US-Patent 5,558,178) ist zur Steuerung eines Verbrennungsmotors bekannt, einen Sollwert für ein Drehmoment des Verbrennungsmotors in eine Stellgröße zur Beeinflussung der Luftzufuhr zum Verbrennungsmotor, zum Einstellen des Zündwinkels und/oder zum Ausblenden bzw. Zuschalten der Kraftstoffzufuhr zu einzelnen Zylindern des Verbrennungsmotors umzusetzen. Darüber hinaus ist aus der WO-A 95/24550 (US-Patent 5,692,471) zusätzlich die Beeinflussung des Kraftstoff-/Luftverhältnisses zur Realisierung des vorgegebenen Drehmomentenwertes bekannt. Ferner wird bei den bekannten Lösungen das Istmoment des Verbrennungsmotors unter Berücksichtigung der aktuellen Motoreinstellung (Füllung, Kraftstoffzumessung und Zündwinkel) berechnet. Dabei werden u.a. Motordrehzahl, Last (Luftmasse, Druck, etc.) und ggf. die Abgaszusammensetzung herangezogen.

Im Rahmen dieser Berechnungen wird ein Momentenmodell für den Verbrennungsmotor verwendet, welches sowohl zur Bestimmung der Stellgrößen als auch zur Bestimmung der Istgrößen eingesetzt wird. Kernpunkt dieses Modells ist, daß betriebspunktabhängig Werte für ein optimales Drehmoment des Verbrennungsmotors und für einen optimalen Zündwinkel bestimmt werden, die dann mittels Wirkungsgradwerten entsprechend der aktuellen Einstellung des Verbrennungsmotors korrigiert werden.

Zur Optimierung dieses Modells ist aus der DE 195 45 221 A1 (US-Patent 5,832,897) und auch aus der US-6,205,973 vorgesehen, den Wert für den optimalen Zündwinkel abhängig von den Wirkungsgrad der Brennkraftmaschine beeinflussenden Größen wie Abgasrückführrate, Motortemperatur, Ansauglufttemperatur, Ventilüberschneidungswinkel, etc. zu korrigieren.

In der Praxis hat es sich jedoch gezeigt, daß diese bekannte Lösung noch optimiert werden kann, insbesondere hinsichtlich der Einfachheit der Applikation, der Optimierung der Rechenzeit und/oder der Berücksichtigung der Arbeitspunktabhängigkeit der Korrektur des optimalen Zündwinkels, insbesondere der Abhängigkeit von der Inertgasrate. Insbesondere zeigt das bekannte Momentenmodell in einigen Betriebszuständen nicht zufriedenstellende Ergebnisse. Derartige Betriebszustände sind insbesondere Zustände mit hohen Inertgasraten, d.h. Zustände mit einem großen Anteil an Inertgas (durch externe oder innere Abgasrückführung), der durch Überschneidung von Ein- und Auslaßventilöffnungszeiten hervorgerufen wird und vor allem bei kleinen bis mittleren Frischgasfüllungen. Außerdem sind es Betriebszustände mit hoher Ladungsbewegung. Die berechneten Basisgrößen führen dazu, daß mit der bekannten Vorgehensweise eine genaue Momentberechnung nicht erreicht wird, da diese Effekte nicht ausreichend berücksichtigt sind.

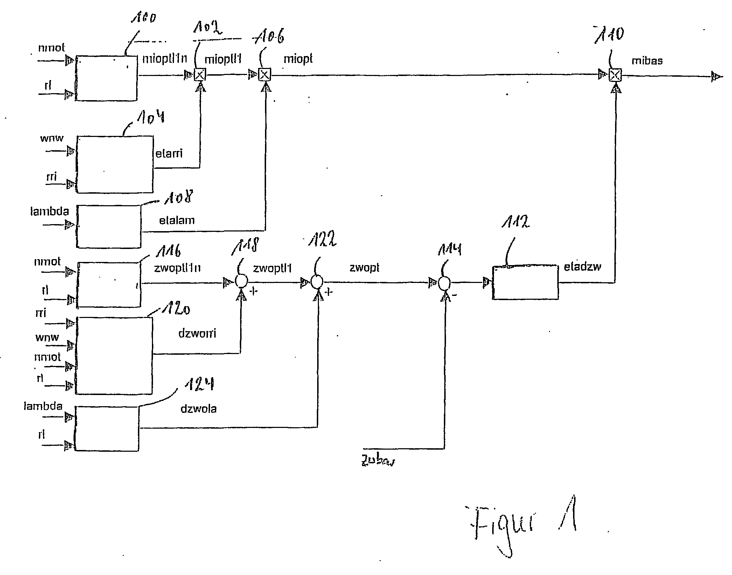

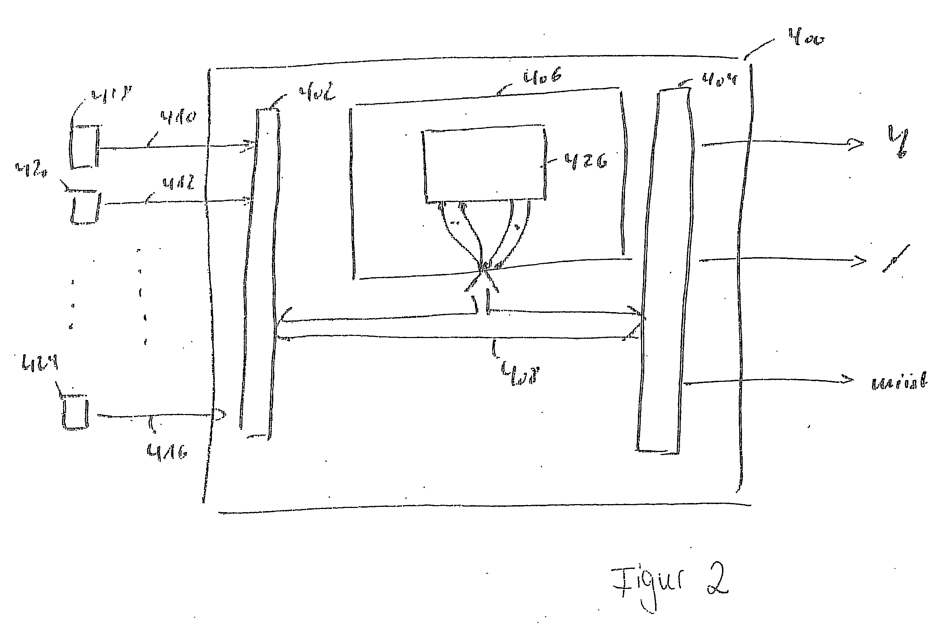

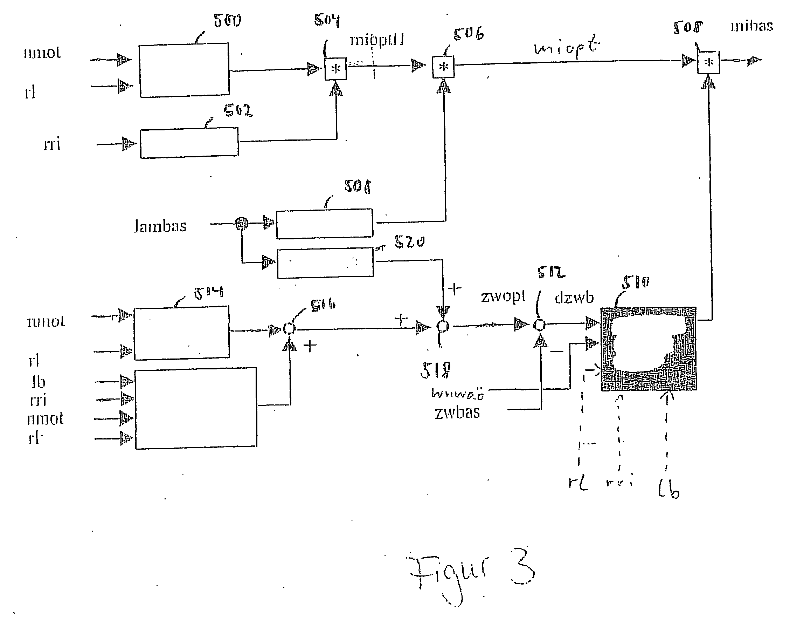

Eine weitere Schwierigkeit besteht darin, dass das bekannte Modell zwar wesentliche Einflüsse auf den Zündwinkel bei Bestimmung des maximalen Moments berücksichtigt, jedoch nicht die unterschiedliche Steilheit des Zusammenhangs zwischen Zündwinkel und dem im aktuellen Betriebspunkt des Motors erreichbarem maximalen Motormoment bei unterschiedlichen Gemischen. Bei der Optimierung des bekannten Modells muss also ein Kompromiss gefunden werden, der in der Regel darin besteht, dass der optimale Zündwinkel nicht mehr mit dem Zündwinkel des besten Moments zusammenfällt. So liegt bei sehr gut brennbaren Gemischen, die bei Erzeugung des besten Moments einen sehr späten Zündwinkel haben, der optimale Zündwinklel deutlich später als dieser Zündwinkel, während er bei schlecht brennbaren Gemischen deutlich früher liegt als der Zündwinkel, bei dem das maximale Moment erzeugt wird. Dieses Verhalten ist in Figur 3 skizziert. Dort ist gestrichelt die durch die Optimierung des bekannten Modells bereitgestellte Kurve dargestellt. Man sieht, dass Ist- und Modellkurve nicht mehr exakt übereinstimmen. In einem Anwendungsbeispiel hat sich bei bestmöglichem, optimalem Zündwinkel ein resultierender Momentenfehler von bis zu 20% ergeben, bezogen auf das optimale Moment $MI_{opt}$.

Es zeigt sich also, dass je größer die Steilheit der Zündhaken (Zusammenhang zwischen dem optimalen Zündwinkel $ZW_{opt}$ und dem Moment MI in Bezug auf den oberen Totpunkt der Zündungsphase Zünd-OT für einen Betriebspunkt des Motors) variiert, desto mehr weichen optimaler Zündwinkel und maximaler Zündwinkel, bei dem das maximale Moment erreicht wird, bei extrem gut und schlecht brennbaren Gemischen voneinander ab und desto größer werden die Fehler des Momentenmodells. Durch den bekannten Optimierer der Modellparameter gelingt es nicht, eine Bedatung des Modells, insbesondere des optimalen Zündwinkels, zu finden, so dass das Momentenmodell im gesamten Zündwinkelbereich eine geringe Toleranz aufweist.

Es besteht daher Bedarf an einer weiteren Optimierung des Momentenmodells, insbesondere mit Blick auf Motorsteuersysteme mit hohen Inertgasraten, beispielsweise bei Motorsteuersystemen mit variabler Ventilverstellung und/oder Ladungsbewegungsklappe.

Aus der nicht vorveröffentlichten deutschen Patentanmeldung 101 49 477.7 sind ein Verfahren und eine Vorrichtung sowie ein Computerprogramm zur Steuerung eines Verbrennungsmotors bekannt, wobei im Rahmen der Berechnung von Istgrößen und/oder Stellgrößen ein Momentenmodell Verwendung findet. Dabei wird eine Korrektur eines unter Normbedingungen ermittelten Basiswertes in Abhängigkeit der Inertgasrate und/oder des Ventilüberschneidungswinkels vorgenommen. Ferner wird zur weiteren Verbesserung der Genauigkeit des Modells der Wirkungsgrad für die Umsetzung der chemischen in mechanische Energie, mit dem der optimale Momentenwert korrigiert wird, abhängig von der Abweichung zwischen optimalem Zündwinkel und einem aktuellem Zündwinkel sowie einer weiteren, die Brennwilligkeit des Gemisches repräsentierenden Größe bestimmt. Letztere ist dabei der optimale Zündwinkel.

Vorteile der Erfindung

Das erfindungsgemäße Verfahren, die erfindungsgemäße Vorrichtung, das erfindungsgemäße Computerprogramm und das erfindungsgemäße Computerprogrammprodukt mit den Merkmalen der unabhängigen Ansprüche haben demgegenüber den Vorteil, dass der Wirkungsgrad für die Umsetzung der chemischen in mechanische Energie mindestens in Abhängigkeit von einer den Verbrennungsschwerpunkt charakterisierenden Größe und von einer den Öffnungszeitpunkt eines auslaßseitigen Gaswechselventils charakterisierenden Größe bestimmt wird. Auf diese Weise wird die mit einem frühen Öffnen des auslaßseitigen Gaswechselventils verbundene Abnahme des indizierten Motormoments im Momentenmodell berücksichtigt. Somit läßt sich eine hohe Genauigkeit des mittels des Momentenmodells berechneten indizierten Motormoments auch bei sehr früh öffnendem Auslaßventil erzielen. Dadurch läßt sich eine Verbesserung, insbesondere eine Vereinfachung der Applikation des Momentenmodells realisieren.

Durch die in den Unteransprüchen aufgeführten Maßnahmen sind vorteilhafte Weiterbildungen und Verbesserungen des im Hauptanspruch angegebenen Verfahrens möglich.

Vorteilhaft ist es auch, wenn der Wirkungsgrad zusätzlich abhängig von der Füllung bestimmt wird. Durch die Berücksichtigung der Füllung wird die Genauigkeit des Momentenmodells noch weiter erhöht.

Ein weiterer Vorteil besteht darin, dass als den Verbrennungsschwerpunkt charakterisierende Größe die Abweichung zwischen einem optimalen Zündwinkel und einem aktuellen Zündwinkel gewählt wird. Bei einer Invertierung des Momentenmodells läßt sich sowohl eine Berechnung eines Sollzündwinkels bei gegebenem Sollmoment und gegebener Füllung sowie die Berechnung einer Sollfüllung bei gegebenem Sollmoment und gegebenem Basiszündwinkelwirkungsgrad als auch eine Berechnung des Istmoments realisieren.

Ein weiterer Vorteil besteht darin, dass der Wirkungsgrad in einen ersten Teilwirkungsgrad und in einen zweiten Teilwirkungsgrad aufgeteilt wird, wobei der erste Teilwirkungsgrad in Abhängigkeit von der den Verbrennungsschwerpunkt charakterisierenden Größe und der zweite Teilwirkungsgrad in Abhängigkeit von der den Öffnungszeitpunkt des auslaßseitigen Gaswechselventils charakterisierenden Größe bestimmt wird. Auf diese Weise ist eine vereinfachte Realisierung für den Fall möglich, dass kein extrem frühes Öffnen des auslaßseitigen Gaswechselventils vorkommt. Der Wirkungsgrad kann dann als Produkt der beiden Teilwirkungsgrade bestimmt werden.

Weitere Vorteile ergeben sich aus der nachfolgenden Beschreibung des Ausführungsbeispiels.

Zeichnung

Die Erfindung wird nachstehend anhand der in der Zeichnung dargestellten Ausführungsformen näher erläutert. In Figur 1 ist ein Ablaufdiagramm einer ersten Ausführung des verwendeten Modells dargestellt. Figur 2 zeigt ein Übersichtbild einer Motorsteuerung, bei der das skizzierte Modell Anwendung findet. In Figur 3 ist ein weiteres Ausführungsbeispiel des Momentenmodells zur Bestimmung eines Istmoments dargestellt. Figur 4 zeigt ein Beispiel für ein Kennfeld zur Ermittlung des Wirkungsgrades für die Umsetzung der chemischen in mechanische Energie und Figur 5 zeigt ein inverses Momentenmodell zur Berechnung eines Sollzündwinkels.

Beschreibung der Ausführungsbeispiele

In Figur 1 ist ein Ablaufdiagramm eines ersten Ausführungsbeispiels zur Verbesserung des Momentenmodells dargestellt. Figur 1 beschreibt dabei ein Programm eines Mikrocomputers, wobei die einzelnen Elemente der Darstellung in Figur 1 Programme, Programmschritte oder Programmteile darstellen, während die Pfeile den Informationsfluß beschreiben. Dargestellt ist die Berechnung des Istbasismoments, d.h. das Moment, was sich bei Einstellen des Basiszündwinkels, der drehzahl- und lastabhängig aus einem Kennfeld ausgewählt wird, einstellt.

Wesentlich ist, daß bei dem in Figur 1 dargestellten Modell eine Korrektur des optimalen Momentenwertes unter Berücksichtigung der Inertgasrate sowie der Ladungsbewegung und eine Korrektur des optimalen Zündwinkelwertes unter Berücksichtigung der Inertgasrate und der Ladungsbewegung, somit des aktuellen Arbeitspunkts, stattfindet.

In einem ersten Kennfeld 100 wird abhängig von Motordrehzahl nmot und Istfüllung rl, die unter Berücksichtigung eines Saugrohrmodells aus dem gemessenen Luftmassenstrom bestimmt wird, ein Wert mioptlln für das optimale Drehmoment ausgelesen. Die Kennfeldwerte des Kennfeld 100 sind dabei unter definierten, optimalen Randbedingungen ermittelt, insbesondere wenn der Lambdawert einen Normwert (z.B. 1) aufweist, ein optimaler Zündwinkel eingestellt ist und der Wirkungsgrad etarri für die Ventilüberschneidung (Inertgasrate und Ladungsbewegung) einen Normwert (z.B. 1) aufweist. Der optimale Momentenwert wird in einer Multiplikationsstelle 102 mit dem Wirkungsgrad etarri multipliziert, der die Abweichung bezüglich der Ventilüberschneidung vom Normwert beschreibt. Der Wirkungsgradwert etrarri wird in dem Kennfeld 104 in Abhängigkeit von Signalen gebildet, die eine Inertgasrate durch interne und externe Abgasrückführung sowie die Ladungsbewegung repräsentieren. Als geeignet hat sich ein Signal rri für die interne und externe Inertgasrate erwiesen, welches in Abhängigkeit der Stellung des Abgasrückführventils und der Ein- und Auslaßventilstellung berechnet wird. Die Inertgasrate beschreibt dabei den Anteil des Inertgases an der gesamten angesaugten Gasmasse. Eine andere Art der Berechnung der Inertgasrate beruht auf der Temperatur des rückgeführten Abgasstromes, Lambda, der aktuellen Luftfüllung und dem Abgasdruck. Zur Berücksichtigung der Ladungsbewegung hat sich ein Signal wnw als geeignet erwiesen, welches den Öffnungswinkel (bezogen auf Kurbelwelle oder Nockenwelle) des Einlaßventils repräsentiert. In anderen Ausführungsbeispielen wird die Stellung einer Ladungsbewegungsklappe oder eine Größe herangezogen, die den Hub und die Phase der Öffnung der Einlaßventile repräsentiert.

Abhängig von diesen Istgrößen wird der Wirkungsgrad etarri bestimmt, der die durch Inertgas und Ladungsbewegung zustandekommenden Abweichungen im Momentenwert von dem unter Normbedingungen ermittelten Momentenwert, der der Bestimmung des Kennfeldes 100 zugrunde liegt, beschreibt. Der durch die Korrektur in der Multiplikationsstelle 102 gebildete optimale Momentenwert mioptl1 wird in einer weiteren Multiplikationsstelle 106 mit dem Lambdawirkungsgrad etalam multipliziert. Dieser wird in einer Kennlinie 108 abhängig von der aktuellen Abgaszusammensetzung Lambda ermittelt. Ergebnis ist ein optimaler Momentenwert miopt, der den aktuellen Betriebszustand des Verbrennungsmotors und dessen Abweichung von den Normwerten, der bei der Bestimmung der optimalen Momentenwerte zugrundegelegt wird, berücksichtigt. miopt ist somit der optimale Wert für das indizierte Moment bei optimalem Zündwinkel. Zur Bildung des Basismomentes mibas, aus dem dann das Istmoment abgeleitet werden kann, ist somit die Basiszündwinkeleinstellung in Bezug auf die optimale Zündwinkeleinstellung zu berücksichtigen. Dies erfolgt in der Multiplikationsstelle 110, in dem der optimale Momentenwert miopt mit dem Zündwinkelwirkungsgrad etadzw korrigiert wird.

Der Zündwinkelwirkungsgrad etadzw wird aus einer Kennlinie 112 in Abhängigkeit der in 114 gebildeten Abweichung zwischen Basiszündwinkel zwbas und optimalem Zündwinkel zwopt gebildet. Der Wirkungsgrad etadzw bestimmt daher die Auswirkung der Abweichung des Basiszündwinkels vom optimalen Zündwinkelwert auf das Moment des Verbrennungsmotors. Der Basiszündwinkel entspricht dabei dem Zündwinkel, der in Abhängigkeit von Drehzahl und Last aus einem Basiszündwinkelkennfeld ausgelesen wird. Er entspricht nicht notwendigerweise dem tatsächlich eingestellten Zündwinkel, der bei der Bestimmung des Istmomentes in Abhängigkeit des Basismomentes in Form eines weiteren Wirkungsgrades zu berücksichtigen ist. Der optimale Zündwinkelwert wird in Abhängigkeit von Motordrehzahl nmot und Füllung rl aus dem Kennfeld 116 ausgelesen. Der ausgelesene optimale Zündwinkelwert zwoptlln wird einer Verknüpfungsstelle 118 zugeführt, in der dieser Wert mit dem Korrekturwert dzworri korrigiert wird. Dieser Korrekturwert wird in einem Kennfeld 120 gebildet in Abhängigkeit der Inertgasrate rri, des Signals wnw zur Berücksichtigung der Ladungsbewegung, sowie von den aktuellen Betriebspunkt repräsentierenden Signalen Motordrehzahl nmot und Istfüllung rl. Der auf diese Weise korrigierte optimale Zündwinkelwert zwoptll wird in einer weiteren Verknüpfungsstelle 122 mit einem Korrekturwert dzwola korrigiert. Dieser stellt einen Lambdakorrekturwert dar, der im Kennfeld 124 in Abhängigkeit von Lambda und Istfüllung RL ermittelt wird. Die Korrekturen in den Verknüpfungsstellen 118 und 122 werden vorzugsweise durch Addition durchgeführt. Diese Vorgehensweise hat sich als geeignet erwiesen, da dann auch bei den Korrekturwerten der aktuelle Betriebspunkt des Verbrennungsmotors berücksichtigt werden muß. Der in 122 sich ergebende Wert zwopt stellt den optimalen Zündwinkelwert dar, der in der Verknüpfungsstelle 114 mit dem Basiszündwinkel verglichen wird.

Durch das beschriebene Modell werden auch die oben genannten Betriebszustände mit hohen Inertgasraten und Ladungsbewegungen und kleinen bis mittleren Frischgasfüllungen zufriedenstellend beherrscht. Wesentlich ist hierbei, daß im Momentenmodell eine Korrektur des optimalen Zündwinkels und eine Korrektur des optimalen Momentes stattfindet. Der optimale Zündwinkel setzt sich dabei zusammen aus einem last- und drehzahlabhängigen Grundwert und additiven Korrekturen in Abhängigkeit der Inertgasrate, der Ein- bzw. Auslaßventilstellung bzw. der Ventilüberschneidung, von Lambda, Last und Drehzahl. Das optimale Moment setzt sich zusammen aus einer last- und drehzahlabhängigen Grundgröße und multiplikativen Korrekturen abhängig von der Inertgasrate und der Ein- und Auslaßventilstellung, von Lambda und vom Zündwinkelwirkungsgrad in Bezug auf den Basiszündwinkel.

Zur Bestimmung der Parameter des Modells wird ein Softwaretool eingesetzt, welches in der Lage ist, aus den gemessenen Eingangsgrößen und dem gemessenen Moment die Parameter des Modells so zu optimieren, daß das Fehlerquadrat über die gesamte Meßpunkte am kleinsten bleibt. Ein Beispiel für ein solches Softwaretool ist aus der DE 197 45 682 A1 bekannt.

Das mittels des Modells bestimmte Basismoment mibas wird auf verschiedene Weise weiterverarbeitet. Unter Berücksichtigung des Wirkungsgrads der tatsächlichen Zündwinkeleinstellung wird das Istmoment berechnet. Eine andere Auswertung besteht in der Bestimmung der Zündwinkeleinstellung, wobei der Unterschied zwischen Sollmoment und Basismoment zur Korrektur der Zündwinkeleinstellung herangezogen werden kann.

Das in Figur 1 beschriebene Modell zeigt die Berechnung des Istmoments aus verschiedenen Betriebsgrößen.

Durch Umkehrung des Modells wird analog zum Modell des eingangsgenannten Stand der Technik das Modell auch zur Bestimmung der Stellgrößen (z.B. Zündwinkel, Lambda, etc.) abhängig vom Sollmomentenwert oder von der Abweichung zwischen Sollmoment und Basismoment oder Istmoment verwendet.

Das Modell lässt sich auch wie folgt formulieren:

```
mibas = f1(nmot,rl)*f21(rri)*f22(wnw)*f3(lambda)*f4(zwopt-
zwbas)
```

oder bezogen auf das Istmoment:

```
miist = f1(nmot,rl)*f21(rri)*f22(wnw)*f3(lambda)*f4(zwopt-
zwist)
```

Mit einer Umkehrung des Modells lassen sich dann Stellgrößen ableiten, z.B. einen Zündwinkelsollwert zwsoll:

```
zwsoll = zwopt - f4⁻¹[misoll/(f21(rri)*f22(wnw)*f3(lambda))]
```

Die zur Berechnung des Modells verwendeten Kennfelder und Kennlinien werden im Rahmen der Applikation für jeden Motortyp ggf. unter Verwendung des oben erwähnten Softwaretool, bestimmt.

Figur 2 zeigt eine Steuereinheit 400, welche eine Eingangsschaltung 402, eine Ausgangsschaltung 404 und einen Mokrocomputer 406 umfasst. Diese Komponenten sind mit einem Bussystem 408 verbunden. Über Eingangsleitungen 410 und 412 bis 416 werden die zur Motorsteuerung auszuwertenden Betriebsgrößen, die von Messeinrichtungen 418, 420 bis 424 erfasst werden zugeführt. Die zur Modellbereichnung notwendigen Betriebsgrößen sind dabei oben dargestellt. Die erfassten und ggf aufbereiteten Betriebsgrößensignalen werden dann über das Bussystem 408 vom Mikrocomputer eingelesen. Im Mikrocomputer 406 selbst, dort in seinem Speicher sind die Befehle als Computerprogramm abgelegt, die zu Modellberechnung verwendet werden. Dies ist in Figur 2 mit 426 symbolisiert. die Modellergebnisse, die ggf noch in anderen, nicht dargstellten Programmen weiterverarbeitet werden, werden dann vom Mikrocomputer über das Bussystem 408 der Ausgangsschaltung 404 zugeführt, welche dann Ansteuersignal als Stellgrößen z.B. zur Einstellung des Zündwinkels und der Luftzufuhr sowie Messgrößen wie z.B. das Istmoment MI$_{ist}$ ausgibt.

In Figur 3 ist ein Ablaufdiagramm für ein Momentenmodell unter Verwendung der oben genannten Zusammenhänge für einen Basisbetriebspunkt dargestellt. Neben der Differenz aus optimalem Zündwinkel und Basiszündwinkel (Istzündwinkel) geht auch noch die den Öffnungszeitpunkt des auslaßseitigen Gaswechselventils charakterisierende Größe des Verstellwinkels wnwaö der Nockenwelle in den Block 510 zur Berechnung eines erweiterten Zündwinkelwirkungsgrades ein.

Wie oben erwähnt wird im Kennfeld 500 abhängig von Motordrehzahl Nmot und Istfüllung rl sowie in der Kennlinie 502 in Abhängigkeit der Inertgasrate rri ein Wirkungsgrad gebildet, welcher in der Multiplikationsstelle 504 mit dem im Kennfeld 500 gebildeten unter Normbedingungen optimalen Momentenwert multipliziert wird. Der daraus ermittelte optimale Momentenwert miopt11 wird in einer Multiplikationsstelle 506 mit einem Lambda-Wirkungsgrad multipliziert. Dieser wird in der Kennlinie 508 in Abhängigkeit des Basis-Lambdawertes lambdas gebildet, welcher im jeweiligen Betriebspunkt ohne ggf. von aussen vorgegebene Korrekturen einzustellen ist. Das Ergebnis der Multiplikation in 506 ist ein optimaler Momentenwert miopt und wird einer weiteren Multiplikation in 508 unterzogen, in der der optimale Momentenwert miopt mit dem Zündwinkelwirkungsgrad etazwist, der in 510 gebildet wird, multipliziert wird. Ergebnis ist das Basismoment mibas für den aktuellen Betriebspunkt. Entsprechend der oben genannten Darstellung wird der Zündwinkelwirkungsgrad in Abhängigkeit der in 512 gebildeten Differenz zwischen optimalem Zündwinkel zwopt und Basiszündwinkel zwbas sowie dem direkt zugeführten Verstellwinkel wnwa der Nockenwelle bestimmt. Der optimale Zündwinkelwert wird dabei in einem Kennfeld 514 abhängig von Motordrehzahl und Füllung gebildet, dieser optimale ZÜndwinkel in einer Summationsstelle 516 abhängig von einem in Abhängigkeit der Ladungsbewegung LB, der Inertgasrate rri, der Motordrehzahl Nmot und der Füllung rl bestimmten Korrekturwert korrigiert. Der korrigierte optimale Zündwinkel wird in einer weiteren Korrekturstelle 518 mit einem Lambda-Wert abhängigen Korrekturwert korrigiert, der in der Kennlinie 520 in Abhängigkeit des Basis-Lambdawertes gebildet wird. Der auf diese Weise korrigierte, optimale Zündwinkelwert zwopt wird dann zur Bildung des Zündwinkelwirkungsgrades in 510 und zur Bestimmung des Istmomentes ausgewertet.

Das gemäß dem Ablaufdiagramm nach Figur 3 realisierte Momentenmodell ist somit auch für Verbrennungsmotoren mit früh oder sehr früh öffnenden auslaßseitigen Gaswechselventilen bzw. Auslaßventilen geeignet. Es liefert ausgehend vom Basismoment mibas **das Istmoment als** indiziertes Motormoment mit hoher Genauigkeit auch bei früh oder sehr früh öffnenden Auslaßventilen und späten Zündwinkeln. Ein frühes Öffnen eines Auslaßventils kann dabei beispielsweise durch eine entsprechende Phasenverstellung der Auslaßnockenwelle erreicht werden.

Ein Auslaßventil gilt hier dann als **früh öffnend, wenn es vor Erreichen des unteren Totpunktes der Zündungsphase Zünd-UT öffnet und als** sehr früh öffnend, wenn es noch weniger als einem Kurbelwinkel bzw. **einer** Phasenverstellung der Auslaßnockenwelle von 120° nach dem oberen Totpunkt der Zündungsphase Zünd-OT und somit mehr als einem Kurbelwinkel von 60° vor Erreichen des unteren Totpunkts der Zündungsphase Zünd-UT öffnet.

Entscheidend für die Umsetzung von chemischer in mechanische Energie und somit zur Bildung des indizierten Moments ist die Ausnutzung der Wärmeenergie, die beim Verbrennungsprozess frei wird.

Vernachlässigt man die Wandwärmeverluste im Brennraum, so ist neben dem sogenannten Verbrennungsschwerpunkt und dem Verlauf der Verbrennung, der als Fibe-Funktion bezeichnet ist, auch noch der Öffnungszeitpunkt des jeweiligen Auslaßventils entscheidend für diese Ausnutzung der Wärmeenergie.

Der Verbrennungsschwerpunkt ist dabei als der Kurbelwinkel definiert, bei dem die Hälfte der Verbrennungsenergie umgesetzt ist. Die Fibe-Funktion beschreibt die zeitliche Umsetzung der chemischen Energie über dem Kurbelwinkel.

Ein sehr frühes Öffnen des jeweiligen Auslaßventils führt zu einem schnellen Abbau des Drucks im Brennraum zu einem Zeitpunkt, wo der Kolben sich noch nennenswert nach unten bewegt und damit zu einem geringeren mittleren indizierten Moment. Der Anteil des "verlorenen" Moments hängt nicht nur vom Zeitpunkt des Öffnens des jeweiligen Auslaßventils, also beispielsweise dem Kurbelwinkel, bei dem das jeweilige Auslaßventil öffnet, sondern noch von anderen Größen ab.

Insbesondere spielt der Verbrennungsschwerpunkt eine entscheidende Rolle. Bei einem späten Verbrennungsschwerpunkt, der beispielsweise durch späte Zündwinkel charakterisiert ist, ist der Druck z.B. bei einem Kurbelwinkel von 120° nach dem oberen Totpunkt der Zündungsphase Zünd-OT deutlich höher. Der Arbeitsanteil des in der zweiten Hälfte der Abwärtsbewegung des Kolbens geleisteten mechanischen Energie ist bei späten Zündwinkeln größer.

Je kleiner die Füllung im Brennraum, desto geringer ist auch der Verbrennungsspitzendruck und um so schneller fällt der Brennraumdruck beim Herablaufen des Kolbens ab. Bei sehr kleinen Lasten fällt der Brennraumdruck unter den Umgebungsdruck, so dass ein frühes Öffnen des jeweiligen Auslassventils hier zu einer Erhöhung des indizierten Moments führt, da der negative Anteil der Expansionsarbeit wegfällt.

Bei späten Zündwinkeln erhält man jedoch auch bei kleinen Füllungen ein maximales indiziertes Moment beim Öffnen des jeweiligen Auslaßventils im unteren Totpunkt der Zündungsphase Zünd-UT oder kurz vor dem unteren Totpunkt der Zündungsphase Zünd-UT. Simulationsergebnisse zeigen jedoch, dass bezogen auf die relativen Größen sich kaum etwas in Abhängigkeit der Füllung rl ändert. Die Füllung rl wird daher nicht unbedingt zur Berücksichtigung der Verluste eines früh öffnenden jeweiligen Auslaßventils benötigt. Ihre Berücksichtigung würde aber die Genauigkeit des Momentenmodells noch etwas verbessern. Deshalb ist in Figur 3 als weitere Eingangsgröße in den Block 510 gestrichelt die Füllung rl vorgesehen.

Die in der nicht vorveröffentlichten deutschen Patentanmeldung 101 49 477.7 beschriebene Struktur des Momentenmodells wird hier gemäß der Ausführungsform nach Figur 3 erweitert. Dabei wird der bisher definierte Zündwinkelwirkungsgrad etadzw = f(dzw) in seiner Bedeutung erweitert. Er bekommt eine zusätzliche Abhängigkeit vom Kurbelwinkel wnwaö, bei dem das jeweilige Auslaßventil öffnet. Er beschreibt damit den Gesamtwirkungsgrad der Umsetzung der chemischen Energie in mechanische Energie unter Berücksichtigung auch der Verluste, die durch ein frühes Öffnen des jeweiligen Auslaßventils entstehen.

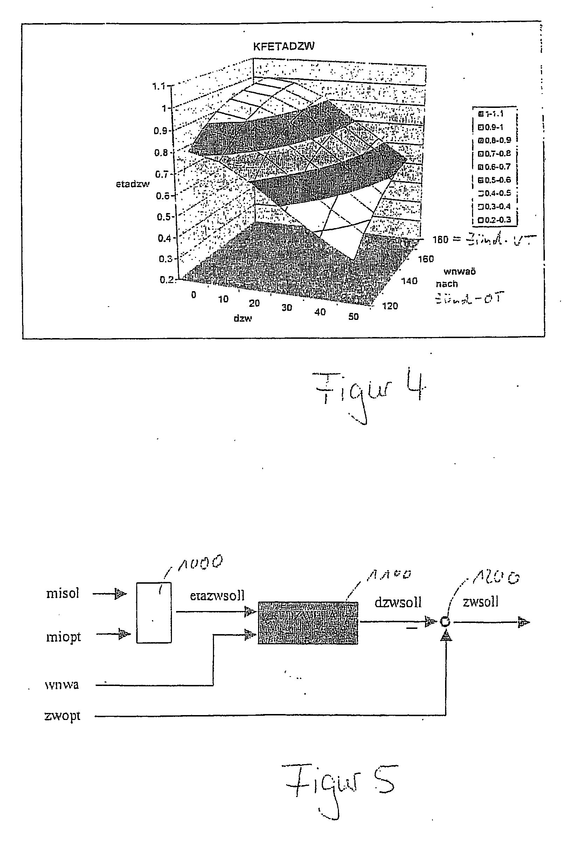

Das Ablaufdiagramm nach Figur 3 zeigt eine beispielhafte Realisierung. Gegenüber dem Bekannten ist nun im Block 510 ein Kennfeld KFETADZW realisiert, das beispielsweise aus dem Kurbelwinkel wnwaö, bei dem das jeweilige Auslaßventil öffnet und der dem Verstellwinkel der Auslaß-Nockenwelle entspricht, und der Abweichung dzw des Zündwinkels von seinem optimalen Wert zwopt, bei dem sich das größte induzierte Moment einstellt, den Gesamtwirkungsgrad etadzw der Umsetzung der chemischen Energie in mechanische Energie ermittelt. Das Kennfeld KFETADZW ist in Figur 4 als Ergebnis einer Simulation dargestellt. Die Reduktion des indizierten Moments, also die Verringerung des Gesamtwirkungsgrades etadzw wird dabei bei gleichzeitiger Verspätung der Zündung, also für größer werdende Werte für die Abweichung dzw des Zündwinkels von seinem optimalen Wert zwopt, und Verfrühung des Öffnungszeitpunktes des jeweiligen Auslaßventils, das heißt Verringerung des Kurbelwinkels wnwaö, bei dem das jeweilige Auslaßventil öffnet, in Bezug auf den oberen Totpunkt der Zündungsphase Zünd-OT.

Anstelle der Abweichung des Zündwinkels von seinem optimalen Wert zwopt kann genauso gut aber auch der Verbrennungsschwerpunkt oder eine andere Größe als Eingangsgröße des Kennfeldes KFETADZW verwendet werden, die die Lage der Verbrennung über dem Kurbelwinkel beschreibt.

Anstelle des Verstellwinkels wnwaö der Auslass-Nockenwelle kann als Eingangsgröße des Kennfeldes KFETADZW auch eine andere Größe, die den Zeitpunkt des Öffnens des jeweiligen Auslaßventils charakterisiert, verwendet werden.

Bei einer vereinfachten Realisierung für den Fall, in dem kein extrem bzw. sehr frühes Öffnen des Auslaßventils vorkommt, kann man unter Einbuße von Genauigkeit auch das Kennfeld KFETADZW in das Produkt zweier Kennlinien reduzieren. Dies entspricht der Aufteilung des Gesamtwirkungsgrades in zwei Teilwirkungsgrade. Ein erster Teilwirkungsgrad wird in Abhängigkeit von einer den Verbrennungsschwerpunkt charakterisierenden Größe, also beispielsweise der Abweichung des Zündwinkels von seinem optimalen Wert zwopt bestimmt. Ein zweiter Teilwirkungsgrad wird in Abhängigkeit von der den Öffnungszeitpunkt des jeweiligen Auslaßventils charakterisierenden Größe bestimmt. Der erste Teilwirkungsgrad ist somit in diesem Beispiel der bisherige reine Zündwinkelwirkungsgrad und der zweite Teilwirkungsgrad ist in diesem Beispiel der Wirkungsgrad des Öffnungszeitpunktes des jeweiligen Auslaßventils.

Dabei soll der Einfachheit halber bei dieser Betrachtung der Einfluß der Füllung rl auf den Gesamtwirkungsgrad nicht berücksichtigt werden.

Eine Berücksichtigung der Füllung rl würde zu einem dreidimensionalen Kennfeld führen. Dabei kann es sich bei der Füllung rl um eine Frischluftfüllung oder um eine abgasangereicherte Gesamtfüllung handeln, sofern eine externe Abgasrückführung vorgesehen ist oder die interne Abgasrückführung von Bedeutung ist. In diesem Fall könnte auch noch zusätzlich zur Füllung rl die Inertgasrate rri als Eingangsgröße für das Kennfeld KFETADZW dienen, das dann sogar vierdimensional oder fünfdimensional werden würde. Um alle Einflüsse auf den Gesamtwirkungsgrad zu berücksichtigen, könnte auch die Ladungsbewegung 1b zusätzlich mit eingehen. Die Inertgasrate rri und die Ladungsbewegung 1b sind in Figur 3 ebenfalls gestrichelt weil optional als Eingangsgrößen des Kennfeldes 510 dargestellt.

Mit dem verbesserten Momentenmodell gemäß dem Ablaufdiagramm nach Figur 3 wird eine hohe Genauigkeit für die Berechnung des indizierten Moments auch bei sehr früh öffnendem jeweiligen Auslaßventil und späten Zündwinkeln erreicht. Eine frühe Öffnung des jeweiligen Auslaßventils kann gewünscht sein, um frühzeitig die heißen Verbrennungsgase in das Abgassystem zu schieben und dadurch die Aufheizung des Katalysators deutlich zu beschleunigen.

Zur Berechnung des Sollzündwinkels muß das obige Momentenmodell nach Figur 3 invertiert werden. Ein entsprechendes Blockschaltbild zeigt Figur 5.

In einem Block 1000 wird der Sollwert etazwsoll für den erweiterten Zündwinkelwirkungsgrad bzw. den Gesamtwirkungsgrad durch Bildung des Quotienten aus dem einzustellenden Sollmoment misoll und dem optimalen Moment miopt nach folgender Formel bestimmt:

$$\texttt{etazwsoll = misoll/miopt}$$

Dem inversen Kennfeld 1100, das auch als KFDZWETA bezeichnet wird, werden dann der Sollwert etazwsoll für den Gesamtwirkungsgrad und der Kurbelwinkel wnwaö, bei dem das jeweilige Auslaßventil öffnet, als Eingangsgrößen zugeführt. Optional kann zusätzlich wiederum ein Wert für die Füllung rl gegebenenfalls mit Berücksichtigung der Inertgasrate rri und der Ladungsbewegung 1b als Eingangsgröße dem Kennfeld KFDZWETA zugeführt werden. Als Ausgangsgröße ergibt sich dann eine Abweichung dzwsoll des Sollzündwinkels zwsoll vom optimalen Zündwinkelwert zwopt. Zur Bestimmung des Sollzündwinkels zwsoll wird dann die Abweichung dzwsoll des Sollzündwinkels vom optimalen Zündwinkelwert zwopt in einem Subtraktionspunkt 1200 abgezogen.

**Patentansprüche**

1. Verfahren zur Steuerung eines Verbrennungsmotors, bei welchem ein Momentenmodell eingesetzt wird, mit dessen Hilfe wenigstens eine Momenten-Istgröße und/oder wenigstens eine Stellgröße des Verbrennungsmotors in Abhängigkeit einer Vorgabegröße berechnet wird, wobei das Modell wenigstens eine Basisgröße umfasst, die unter vorgegebenen Normbedingungen bestimmt ist und die in Abhängigkeit der tatsächlichen Einstellung des Verbrennungsmotors korrigiert wird, wobei diese Basisgröße ein optimales Moment darstellt, welches mit einem Wirkungsgrad für die Umsetzung der chemischen in mechanische Energie korrigiert wird, **dadurch gekennzeichnet, dass** dieser Wirkungsgrad mindestens in Abhängigkeit von einer den Verbrennungsschwerpunkt charakterisierenden Größe und von einer allein den Öffnungszeitpunkt eines auslassseitigen Gaswechselventils charakterisierenden Größe bestimmt wird.

2. Verfahren nach Anspruch 1, **dadurch gekennzeichnet, dass** der Wirkungsgrad zusätzlich abhängig von der Füllung, insbesondere der Frischluftfüllung, bestimmt wird.

3. Verfahren nach Anspruch 1 oder 2, **dadurch gekennzeichnet, dass** als den Verbrennungsschwerpunkt charakterisierende Größe die Abweichung zwischen einem optimalen Zündwinkel und einem aktuellen Zündwinkel gewählt wird.

4. Verfahren nach Anspruch 1, 2 oder 3, **dadurch gekennzeichnet, dass** als den Öffnungszeitpunkt des auslassseitigen Gaswechselventils charakterisierende Größe der Verstellwinkel der Auslassnockenwelle gewählt wird.

5. Verfahren nach einem der vorherigen Ansprüche, **dadurch gekennzeichnet, dass** der Wirkungsgrad in einen ersten Teilwirkungsgrad und in einen zweiten Teilwirkungsgrad aufgeteilt wird, wobei der erste Teilwirkungsgrad in Abhängigkeit von der den Verbrennungsschwerpunkt charakterisierenden Größe und der zweite Teilwirkungsgrad in Abhängigkeit von der den Öffnungszeitpunkt des auslaßseitigen Gaswechselventils charakterisierenden Größe bestimmt wird.

6. Verfahren nach einem der vorherigen Ansprüche, **dadurch gekennzeichnet, dass** die Stellgröße des Verbrennungsmotors ein Sollzündwinkel ist, der durch Inversion der Berechnungsvorschrift für die Ermittlung des Wirkungsgrades bestimmt wird.

7. Vorrichtung zur Steuerung eines Verbrennungsmotors, mit einer Steuereinheit, in welcher ein Momentenmodell für den Verbrennungsmotor abgelegt ist, mit dessen Hilfe wenigstens eine Ist-Größe ermittelt und/oder aus einem Vorgabewert wenigstens eine Stellgröße ermittelt wird, wobei im Rahmen des Modells wenigstens eine Basisgröße vorgesehen ist, die unter Normbedingungen festgelegt ist und die in Abhängigkeit der Abweichung von diesen Normbedingungen korrigiert wir, wobei die Basisgröße ein optimales Drehmoment ist, welches mit einem Wirkungsgrad für die Umsetzung der chemischen in mechanische Energie korrigiert wird, **dadurch gekennzeichnet, dass** dieser Wirkungsgrad mindestens von einer den Verbrennungsschwerpunkt charakterisierenden Größe und von einer allein den Öffnungszeitpunkt eines auslasseitigen Gaswechselventils charakterisierenden Größe abhängt.

8. Computerprogramm mit Programmcodemitteln, um alle der Schritte von jedem beliebigen der Ansprüche 1 bis 7 durchzuführen, wenn das Programm auf einem Computer ausgeführt wird.

9. Computerprogrammprodukt mit Programmcodemitteln, die auf einem computerlesbaren Datenträger gespeichert sind, um das Verfahren nach jedem beliebigen der Ansprüche 1 bis 6 durchzuführen, wenn das Programmprodukt auf einem Computer ausgeführt wird.

**Claims**

1. Method for controlling an internal combustion engine, which uses a torque model, with the aid of which at least one actual torque variable and/or at least one control variable of the internal combustion engine is calculated as a function of a preset variable, the model comprising at least one base variable which has been determined under predetermined standard conditions and is corrected as a function of the current setting of the internal combustion engine, this base variable representing an optimum torque which is corrected by an efficiency of the conversion of the chemical energy into mechanical energy, **characterized in that** this efficiency is determined at least as a function of a variable which characterizes the combustion centre of gravity and of a variable which characterizes only the opening instant of an exhaust-side gas exchange valve.

2. Method according to Claim 1, **characterized in that** the efficiency is additionally determined as a function of the charge, in particular the fresh-air charge.

3. Method according to Claim 1 or 2, **characterized in that** the deviation between an optimum ignition angle and a current ignition angle is selected as the variable which characterizes the combustion centre of gravity.

4. Method according to Claim 1, 2 or 3, **characterized in that** the adjustment angle of the exhaust camshaft is selected as the variable which characterizes the opening instant of the exhaust-side gas exchange valve.

5. Method according to one of the preceding claims, **characterized in that** the efficiency is divided into a first partial efficiency and a second partial efficiency, the first partial efficiency being determined as a function of the variable which characterizes the combustion centre of gravity, and the second partial efficiency being determined as a function of the variable which characterizes the opening instant of the exhaust-side gas exchange valve.

**6.** Method according to one of the preceding claims, **characterized in that** the control variable of the internal combustion engine is a desired ignition angle, which is determined by inverting the calculation guideline for determining the efficiency.

**7.** Apparatus for controlling an internal combustion engine, having a control unit, in which a torque model for the internal combustion engine is stored, with the aid of which torque model at least one actual variable is determined and/or at least one control variable is determined from a preset value, at least one base variable, which has been defined under standard conditions and is corrected as a function of the deviation from these standard conditions, being provided within the model, the base variable being an optimum torque which is corrected by an efficiency of the conversion of the chemical energy into mechanical energy, **characterized in that** this efficiency is dependent at least on a variable which characterizes the combustion centre of gravity and on a variable which characterizes only the opening instant of an exhaust-side gas exchange valve.

**8.** Computer program with program code means for carrying out all of the steps of any one of Claims 1 to 7 if the program is run on a computer.

**9.** Computer program product with program code means which are stored on a computer-readable data carrier for carrying out the method according to any one of Claims 1 to 6 when the program product is run on a computer.

**Revendications**

**1.** Procédé pour la gestion d'un moteur à combustion interne dans lequel on emploie un modèle de couple à l'aide duquel au moins une grandeur réelle de couple et/ou au moins une grandeur de réglage du moteur à combustion interne est calculée en fonction d'une grandeur de référence, le modèle comprenant au moins une grandeur de base déterminée dans des conditions normées prédéfinies et corrigée en fonction du réglage effectif du moteur à combustion interne, cette grandeur de base représentant un couple optimum corrigé avec un rendement pour la conversion de l'énergie chimique en énergie mécanique,
**caractérisé en ce que**
ce rendement est déterminé au moins en fonction d'une grandeur caractérisant le centre de gravité de la combustion et d'une grandeur caractérisant à elle seule le moment d'ouverture d'une valve d'échange gazeux côté échappement.

**2.** Procédé selon la revendication 1,
**caractérisé en ce que**
le rendement est déterminé en outre en fonction du remplissage, notamment du remplissage d'air frais.

**3.** Procédé selon la revendication 1 ou 2,
**caractérisé en ce que**
l'écart entre un angle d'allumage optimal et un angle d'allumage actuel est choisi comme grandeur caractérisant le centre de gravité de la combustion.

**4.** Procédé selon la revendication 1, 2 ou 3,
**caractérisé en ce que**
l'angle de déplacement de l'arbre à cames d'échappement est choisi en tant que moment d'ouverture de la valve d'échange gazeux côté échappement.

**5.** Procédé selon l'une quelconque des revendications précédentes, **caractérisé en ce que**
le rendement est divisé en un premier et en un deuxième rendements partiels, le premier rendement partiel étant déterminé en fonction de la grandeur caractérisant le centre de gravité de la combustion et le deuxième rendement partiel étant déterminé en fonction de la grandeur caractérisant le moment d'ouverture de la vanne d'échange gazeux côté échappement.

**6.** Procédé selon l'une quelconque des revendications précédentes,
**caractérisé en ce que**
la grandeur de réglage du moteur à combustion interne est un angle d'allumage de consigne déterminé en inversant la directive de calcul pour déterminer le rendement.

**7.** Dispositif pour la gestion d'un moteur à combustion interne, muni d'une unité de commande dans laquelle est enregistré un modèle de couple pour le moteur à combustion interne permettant de calculer au moins une grandeur réelle et/ ou au moins une grandeur de réglage obtenue à partir d'une grandeur de référence, au moins une grandeur de base étant prévue dans le cadre du modèle, laquelle grandeur est déterminée en conditions normées et corrigée en fonction de l'écart par rapport à ces conditions normées, cette grandeur de base étant un couple de rotation optimum corrigé avec un rendement pour la conversion de l'énergie chimique en énergie mécanique,
**caractérisé en ce que**
ce rendement est déterminé au moins par une grandeur caractérisant le centre de gravité de la combustion et d'une grandeur caractérisant à elle seule le moment d'ouverture d'une valve d'échange gazeux côté échappement.

8. Programme informatique muni de moyens de codage de programme afin d'exécuter toutes les étapes de n'importe laquelle des revendications 1 à 7 lorsque le programme est réalisé sur un ordinateur.

9. Produit de programme informatique avec des moyens de codage de programme enregistrés sur un support de données pouvant être lu sur un ordinateur afin de réaliser le procédé suivant l'une quelconque des revendications 1 à 6 lorsque le produit de programme est exécuté sur un ordinateur.

100

102

106

110

nmot

mioptl1n     mioptl1     miopt                    mibas

rl

104

wnw

etarri

rri

108

lambda

etalam

116

112

nmot

zwoptl1n      118      zwoptl1      122      zwopt      114      etadzw

rl

rri

120

wnw

dzworri

nmot

rl

124

lambda

dzwola

rl

Zubav

Figur 1

EP 1 470 333 B1

Figur 2

Figur 3

Figur 4

Figur 5